(19) Europäisches Patentamt
European Patent Office
Office européen des brevets

(11) Numéro de publication: **0 119 912 B1**

(12) **FASCICULE DE BREVET EUROPEEN**

(45) Date de publication du fascicule du brevet: **13.06.90**

(51) Int. Cl.$^5$: **H 01 B 1/12,** H 01 M 6/18, H 01 M 4/60, C 08 L 71/02

(21) Numéro de dépôt: **84400480.4**

(22) Date de dépôt: **09.03.84**

(54) **Matériau macromoléculaire constitué par un sel en solution dans un copolymère.**

(30) Priorité: **11.03.83 ID 9228**
**15.06.83 FR 8309886**

(43) Date de publication de la demande:
**26.09.84 Bulletin 84/39**

(45) Mention de la délivrance du brevet:
**13.06.90 Bulletin 90/24**

(84) Etats contractants désignés:
**AT BE CH DE FR GB IT LI LU NL SE**

(56) Documents cités:
**EP-A-0 037 776**
**EP-A-0 090 710**
**DE-A-3 317 761**
**US-A-3 298 980**
**US-A-3 380 957**
**US-A-4 281 072**

**EXTENDED ABSTRACTS, vol. 81-2, octobre 1981, pages 1485-1489, abrégé no. 615, Pennington, New Jersey, US; M. ARMAND: "The solvent-free elecrolytes: relationship between conductivity and polymer structure"**

**SOLID STATE IONICS, vol. 9/10, partie 2, décembre 1983, pages 745-754, North-Holland Publishing Co., Amsterdam, NL; M. ARMAND: "Polymer solid electrolytes - an overview"**

(73) Titulaire: **SOCIETE NATIONALE ELF AQUITAINE**
**Tour Aquitaine**
**F-92400 Courbevoie (FR)**

(72) Inventeur: **Armand, Michel**
**Domaine Jean Jaurès Allée Maurice Ravel**
**F-38130 Echirolles (FR)**
Inventeur: **Muller, Daniel**
**12 Rue Frédéric Mistral**
**F-64000 Pau (FR)**
Inventeur: **Duval Michel**
**4993 Jean Brillant**
**Montreal H3W IT8 (CA)**
Inventeur: **Harvey, Paul-Etienne**
**2385 Bellerose, app. 402**
**Longueuil - QC J4L 4H8 (CA)**

(74) Mandataire: **Ohresser, François**
**Société Nationale Elf Aquitaine Division Proprieté Industrielle Tour Elf**
**F-92078 Paris La Défense Cédex 45 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Courier Press, Leamington Spa, England.

(56) References cited:
JOURNAL OF THE AMERICAN CHEMICAL SOCIETY, vol. 102, 1980, pages 7981-7982, American Chemical Society, US; W.J. SCHULTZ et al.: "A new family of cation-binding compounds: threo-alpha,upsilon-poly(cyclooxalkane)diyl"

**Description**

L'invention concerne un nouveau matériau à conduction ionique utilisable notamment pour la réalisation d'électrolytes et/ou d'électrodes de générateurs électrochimiques.

On a décrit dans le brevet européen No 0013.199 "Générateurs électrochimiques de production de courante et nouveaux matériaux pour leur fabrication", un générateur dont l'électrolyte est un matériau macromoléculaire à conduction ionique constitué, au moins en partie, par une solution solide d'un composé ionique entièrement dissous au sein d'un matériau macromoléculaire solide plastique. Selon ce brevet européen N° 0013.199, le matériau macromoléculaire est formé, au moins en partie, d'un ou plusieurs homo- ou copolymères dérivés d'un ou plusieurs monomères comportant au moins un hétéroatome, par exemple l'oxygène ou l'azote, apte à former des liaisons du type donneur/accepteur avec le cation du composé ionique.

La présente invention concerne un perfectionnement à ces matériaux en particulier dans le cas où le matériau macromoléculaire est constitué par un copolymère dérivé de l'oxyde d'éthylène. En effet, si les matériaux décrits dans la demande ci-dessus donnent de bons résultats, les inventeurs de la présente demande se sont aperçus qu'il était possible de perfectionner ces matériaux afin d'en améliorer les propriétés, tant électrochimiques que mécaniques, permettant de réaliser des générateurs électrochimiques de courant de haute performance.

Parmi les polymères cités dans la demande de brevet en référence, l'expérience a montré que la structure la plus favorable est celle du polyoxyde d'éthylène en raison des séquences régulières d'atomes d'oxygène et du rapport favorable oxygène sur carbone qui conduisent à de très bonnes propriétés de solvatation vis-à-vis du cation du sel en solution et à des conductivités élevées. Cependant, les polymères de l'oxyde d'éthylène ont l'inconvénient de former des structures cristallines à partir de températures largement supérieures à la température ambiante, ces températures étant fonction en particulier de la concentration en sel dans le polymère.

On assiste donc, pour les températures inférieures à la température de fusion des cristallites à l'apparition d'un phénomène de démixion en deux phases, une phase cristalline riche en sel et à haut point de fusion des cristallites et une seconde phase amorphe, riche en polymère. Ce phénomène de démixion entraîne une diminution de la conductivité ionique et une hétérogénéité du matériau qui est difficilement réversible. Ces deux résultats sont d'autant plus gênants qu'ils rendent nécessaire non seulement d'utiliser l'électrolyte à une température supérieure à ladite température de fusion des cristallites mais encore de stocker ce matériau aux mêmes températures.

On assiste en outre à une altération des propriétés mécaniques. En effet, la présence de ces deux phases démixées entraîne une diminution de l'élasticité propre du matériau, c'est-à-dire de sa souplesse et de son aptitude à se déformer, mais entraîne aussi une diminution de ses propriétés d'adhérence. Cette diminution des propriétés mécaniques est alors pénalisante pour la réalisation de générateurs électrochimiques, en particulier quand on réalise des électrodes composites telles que celles décrites dans le brevet européen n° 0013.199, et qu'on les associe à des collecteurs et/ou des électrolytes rigides. A titre d'exemple, la température de fusion des cristallites pour un polymère d'oxyde d'éthylène contenant du perchlorate de lithium en solution avec un rapport atomique d'oxygène sur lithium de 8 est de l'ordre de 40 à 60°C.

Par contre, si l'utilisation d'homopolymère tels que le polyoxyde de propylène et le polyméthylglycidyléther est favorisée par leur bonne tenue vis-à-vis de la cristallisation, elle est limitée par la faible conductivité de ces homopolymères.

La présente invention prévoit un perfectionnement aux matériaux macromoléculaires à conduction ionique qui permet de réaliser des générateurs fonctionnant à des températures inférieures à la température de fusion des cristallites de polyoxyde d'éthylène, des complexes que forme celui-ci avec le ou les sels en solution et qui présentent aussi des caractéristiques améliorées pour le fonctionnement aux températures supérieures à ladite température de fusion.

En particulier, pour les températures inférieures à cette température de fusion, les matériaux macromoléculaires ainti réalisés ont une meilleure conductivité et présentent une structure homogène. Ils permettent en outre de réaliser des électrodes ayant d'excellents coefficients d'utilisation, aussi bien pour les températures supérieures que les températures inférieures à cette température de fusion. Ils renferment enfin un pourcentage beaucoup plus faible de structures cristallines que le polyoxyde d'éthylène, à toutes les températures, éliminant, par là même, une grande partie des inconvénients reliés à l'utilisation du polyoxyde d'éthylène. De plus, ils conservent cette faible quantité de structures cristallines sur une gamme étendue de concentration de sel.

A cet effet l'invention concerne un matériau à conduction ionique, qui est constitué par une solution solide d'au moins un composé ionique dissous au sein d'un matériau macromoléculaire et se caractérise en ce que ledit matériau macromoléculaire consiste en au moins un copolymère de l'oxyde d'éthylène et d'au moins un deuxième motif constitué par un éther cyclique choisi dans le groupe formé des éthers cycliques, substitués ou non, et dont le cycle comporte plus de trois maillons et des éthers cycliques substitués de formule

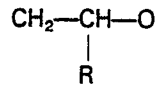

dans laquelle R est soit un radical Ra choisi parmi les radicaux alkyles ou alcényles, notamment en $C_1$ à $C_{12}$ et de préférence en $C_1$ à $C_4$, soit un radical $-CH_2O-Re-Ra$, dans lequel Ra a la même signification que ci-dessus et Re représente un radical polyéther de formule $-(CH_2-CH_2-O)_p-$, p variant de 0 à 10, et en ce que ledit copolymère renferme une proportion molaire globale de deuxième(s) motif(s), allant de 1,5 à 30% et telle que le matériau à conduction ionique soit substantiellement exempt de cristallinité à température ambiante.

Dans les éthers cycliques de formule

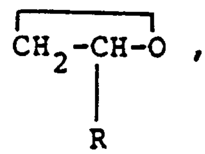

le radical R de type alkyle est en particulier un radical méthyle ou éthyle, tandis que le radical de type $-CH_2-O-Re-Ra$ est en particulier un radical tel que $-CH_2-O-CH_3$, $-CH_2-O-CH=CH_2$ ou encore $-CH_2-O-CH_2-CH=CH_2$.

En ce qui concerne les éthers cycliques comportant plus de trois maillons dans le cycle, qui sont utilisables pour constituer le deuxième moitif du copolymère selon l'invention, on peut citer à titre non limitatif les composés tétrahydrofuranne, oxétanne, dioxanne -1,3, dioxolanne et leurs dérivés substitués.

Les demandeurs ont découvert qu'il était possible d'améliorer les matériaux macromoléculaires à conduction ionique de l'art antérieur en utilisant un copolymère d'oxyde d'éthylène et d'un deuxième motif tel que ceux définis ci-dessus, dont la structure conserve à la chaîne son caractère de polyéther.

Par exemple, dans le cas ou le second motif monomère est choisi parmi les éthers de formule

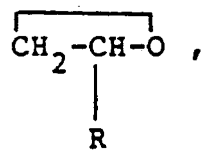

la chaîne obtenue à une structure de polyoxyde d'éthylène dont certains hydrogènes sont substitués par des radicaux R. Cette chaîne est caractérisée par une alternance régulière de deux carbones et d'un oxygéne:

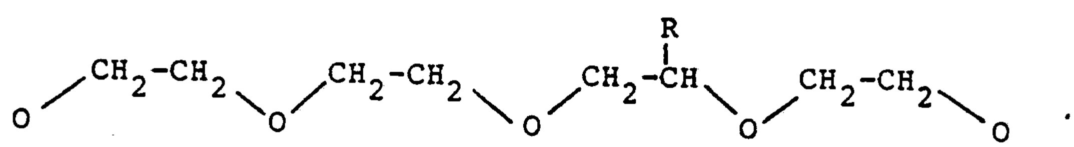

Dans le cas où le deuxième motif est chosi parmi les éther-oxydes cycliques dont le cycle comporte plus de trois maillons, on obtient une chaîne polyéther dans laquelle les oxygènes peuvent être séparés par plus de deux carbones ou par un seul carbone, selon la nature du second motif de départ.

Par exemple, un copolymère oxyde d'éthylène/méthyl-3-oxétanne aura cette structure:

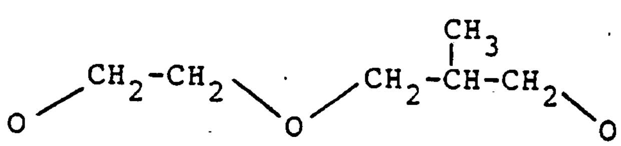

un copolymère oxyde d'éthylène/dioxolanne:

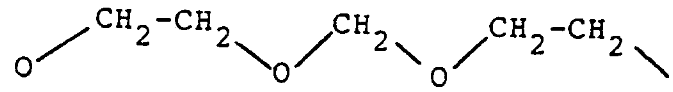

un copolymère oxyde d'éthylène/méthyl 3-THF:

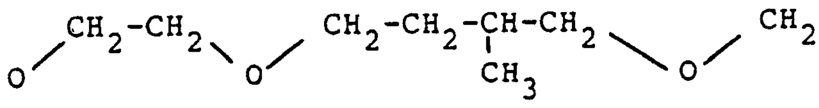

Les demandeurs pensent que l'amélioration apportée par l'invention et qui se traduit notamment par une élévation de la conductivité à température ambiante, est principalement due au fait de l'introduction, dans une chaîne de type polyéther, d'irrégularités structurelles qui permettent de diminuer, voire d'empêcher complètement, l'apparition de phases cristallines aux températures d'utilisation, tout en préservant la structure polyéther de la chaîne, c'est-à-dire son pouvoir de solvatation du sel en solution et sans nuire à la mobilité ionique. Cette propriété peut permettre d'obtenir un matériau amorphe et isotrope, c'est-à-dire une phase amorphe unique, thermodynamiquement stable, en particulier à température ambiante.

Ce résultat est d'autant plus surprenant que l'amélioration du matériau vis-à-vis de la cristallisation s'accompagne d'une élévation de la conductivité à température ambiante, bien que le deuxième motif du copolymère soit moins performant, en conductivité que le premier motif. Par exemple, un homopolymère de type méthyl glycidyléther ou oxyde de propylène présente une très faible conductivité. Malgré cela, si on réalise un copolymère à partir d'oxyde d'éthylène et de méthylglycidyléther ou d'oxyde de propylène, on obtient un matériau dont la conductivité ionique est supérieure à celle d'une homopolymère d'oxyde d'éthylène.

De préférence, le copolymère selon l'invention est un copolymère à distribution statistique.

Selon une caractéristique complémentaire, la masse moléculaire du copolymère selon l'invention est supérieure à 50 000 et de préférence comprise entre 100 000 et 1 000 000.

En ce qui concerne le composé ionique, on peut avoir recours à l'un quelconque de ceux qui ont été définis dans la susdite demande de brevet européen No. 0.013.199, et de préférence à des sels de sodium ou de lithium, par exemple Li $ClO_4$ ou trifluorométhane sulfonate de lithium.

On peut encore avoir recours, et ce à titre d'exemple, à des composés ioniques appartenant:

— à la catégorie de composés qui peut être représentée par la formule globale suivant $(Al\ O_4\ (Si\ R'_3)_4)\ M^+$ dans laquelle M est un métal alcalin, de préférence le sodium ou le lithium, les groupes R' sont des radicaux hydrocarbonés aprotiques, c'est-à-dire des radicaux non donneurs de protons, contenant un nombre d'atomes de carbone qui sera en général inférieur à 15, de préférence des groupes alkyles comportant jusqu'à 4 atomes de carbone, le groupe méthyle terminal pouvant, le cas échéant, être remplacé par un groupe phényle;

— à la catégorie de composés ioniques qui peut être représentée par la formule $(C_nX_{2n+1}Y)_2\ N^-,\ M^+$ dans laquelle:

X est un halogène, de préférence le fluor,

n varie de 1 à 4,

Y est un groupe CO ou $SO_2$ et

M un métal alcalin, de préférence le sodium ou le lithium;

— à la catégorie des halogénoboranes ou analogues de formule générale $M_2 — B_n — X_a — Y_b$ dans laquelle M représente un métal alcalin, tel que le lithium ou le sodium, n est un nombre entier égal à l'une des trois valeurs 8, 10 ou 12, X et Y, qui peuvent être identiques ou différents, représentent chacun un composé choisi parmi l'hydrogène, les halogènes, CN, et un radical hydrocarboné contenant de préférence de 1 à 3 atomes de carbone; a et b sont des nombres entiers dont la somme est égal à n;

— ou encore à la catégorie de composés ioniques représentée par la formule globale suivante: $(R''—C{\equiv}C)_4\ X^-,\ M^+$ dans laquelle X est un élément trivalent susceptible d'entrer en coordinance 4, tel que le bore ou l'aluminium. Les groupes R'' sont des radicaux hydrocarbonés aprotiques, c'est-à-dire des radicaux non donneurs de protons, M est un métal alcalin tel que le lithium, le sodium et le potassium.

Ces différents composés ioniques, qui ont été décrits respectivement dans les demandes de brevets Européens No. 83401083 (EP—A—0095982), No. 83401082 (EP—A—0096629), No. 83400564 (EP—A—0090170) et No. 83401084 (EP—A—0097076) ne constituent bien entendu que des exemples à titre non limitatif de composés ioniques susceptibles d'être mis en solution selon l'invention.

Quel que soit le composé ionique mis en oeuvre, le rapport du nombre d'hétéroatomes provenant du ou des motifs monomères mis en jeu dans le matériau macromoléculaire, au nombre d'atomes du métal alcalin du composé ionique est en général compris entre 4 et 30, de préférence entre 8 et 24.

Tous ces composés ioniques décrits ci-dessus sont des sels dont le cation est monovalent. Mais il est évident que, sans sortir du cadre de l'invention, on pourra utiliser des composés ioniques dont le cation est divalent, voire même d'une valence supérieure à 2. Dans ce cas, l'homme de l'art sera à même d'établir les limites du rapport entre le nombre d'hétéroatomes du coolymère et le nombre d'atomes de cations. Par exemple, pour un cation divalent, ce rapport sera de préférence choisi entre 8 et 60. On pourra, par exemple, utiliser un perchlorate de baryum, de magnésium, de plomb ou de zinc.

Lorsque le ou les deuxièmes motifs du copolymè sont choisis parmi les éthers cycliques de formule

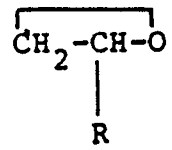 ,

où R est un radical Ra du type alkyle tel que précité, notamment méthyle ou éthyle, la proportion molaire globale de deuxième(s) motif(s) dans le copolymère est avantageusement au plus égale à 25%. De préférence ladite proportion molaire est comprise entre 1,5 et 25% et tout spécialement entre 3 et 25% quand le sel est $LiClO_4$ et elle est supérieure à 5% quand le sel est le trifluorométhanesulfonate de lithium.

Lorsque le ou les deuxièmes motifs du copolymère sont choisis parmi les éthers cycliques de formule

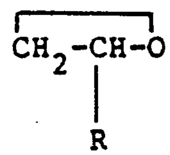 ,

où R est un radical $—CH_2—O—Re—Ra$ tel que défini précédemment, la proportion molaire globale de deuxième(s) motifs(s) dans le copolymère est comprise entre 1,5 et 30% et plus spécialement entre 2,5 et 30% quand le sel est $LiClO_4$ et elle est supérieure à 5% quand le sel est le trifluorométhanesulfonate de lithium.

Les nouveaux matériaux selon l'invention sont des solutions solides d'un composé ionique, ou de plusieurs composés ioniques, dans un matériau macromoléculaire, cette solution solide se présente principalement sous la forme d'une phase amorphe unique, thermodynamiquement stable et elle est caractérisée en ce que le matériau macromoléculaire est un copolymère de l'oxyde d'éthylène et d'au moins un deuxième motif choisi parmi les éthers cycliques tels que définis précédemment.

A titre d'application principale de ces matériaux, l'invention prévoit d'une part de mettre en oeuvre leur propriété de conduction ionique pour la réalisation d'électrolytes et aussi d'électrodes. Pour cela, elle concerne une électrode composite constituée par un mélange d'au moins un matériau électrochimiquement actif et d'un matériau à conduction ionique constitué par une solution solide d'au moins un composé ionique entièrement dissous au sein d'un matériau macromoléculaire constitué d'au moins un copolymère tel que défini plus haut.

Selon une première variante, l'électrode réalisée est l'électrode positive, c'est-à-dire l'électrode pour laquelle une réaction de réduction a lieu quand le générateur se décharge. Cette électrode est de préférence constituée par un mélange d'un matériau électrochimiquement actif choisi parmi les chalcogénures, en particulier le disulfure de titane, et parmi les oxydes métalliques tels que l'oxyde de molybdène et l'oxyde de vanadium $V_6O_{13}$, d'un électrolyte constitué par un matériau à conduction ionique tel que défini ci-dessues et éventuellement d'un faible pourcentgage de noir de carbone, de préférence du noir d'acétylène.

De préférence, ces divers éléments électrochimiquement actifs sont présents sous forme de poudre présentant un granulométrie telle que les diamètres des particules sont inférieurs à 35 microns.

De préférence encore, le sel en solution est un sel de lithium et le rapport du nombre d'atomes d'oxygènes au nombre d'atomes de lithium est compris entre 8 et 24.

Selon une autre variante de l'invention, l'électrode réalisée est l'électrode négative, c'est-à-dire l'électrode à laquelle a lieu la réaction d'oxydation quand le générateur se décharge. Dans ce cas, l'électrode est de préférence constituée par un agglomérat d'une poudre de lithium ou d'un alliage de lithium en particulier avec l'aluminium, d'électrolyte constitué par un matériau à conduction ionique selon l'invention et éventuellement d'un faible pourcentage de noir de carbone. Les électrodes ainsi réalisées présentent d'excellents coefficients d'utilisation dans une large gamme de température.

Un autre avantage que confère l'utilisation d'un matériau à conduction ionique selon l'invention pour la réalisation d'électrode réside dans le fait que de tells électrodes peuvent être associées à tout type d'électrolyte solide. En outre, elles présentent d'excellentes propriétés d'adhérence vis-à-vis des collecteurs de courant utilisés habituellement, par exemple en acier inoxydable.

Dans le cas où cet électrolyte solide est un matériau macromoléculaire à conduction ionique, il n'est pas nécessaire que son matériau macromoléculaire soit identique à celui de l'électrode. On pourra en particulier envisager pour l'électrolyte un homopolymère ou un copolymère différent. Mais on pourra aussi utiliser des électrolytes solides du type de l'alumine béta ou du nitrure de lithium, ou même encore des verres à conduction ionique.

Mais l'utilisation des matériaux à conduction ionique selon l'invention en tant que conducteurs ioniques n'est pas limitée à la réalisation de générateurs électrochimiques. En effet, ces nouveaux matériaux monophasés et thermodynamiquement stables dans un large domaine de température, incluant en particulier la température ambiante, peuvent être utilisés pour toute application mettant en jeu des transferts ioniques, par exemple pour l'affichage du type électrochrome, pour la réalisation de détecteurs d'espèces ioniques, pour des systèmes photoactifs.

Aussi, d'autre part, on peut les utiliser en raison principalement de leur stabilité thermodynamique, chaque fois que l'on recherche un matériau macromoléculaire dans lequel est dissous un sel et qui se présente sous la forme d'un système amorphe monophasé.

Le matériau à conduction ionique selon l'invention peut être fabriqué par toute méthode connue de synthèse de copolymères, que ces synthèses soient du type anionique ou cationique ou encore du type Vandenberg et de mise en solution de composés ioniques dans le matériaux macromoléculaires. De telles méthodes de mise en solution sont par exemple décrites dans la demande de brevet européen n° 0013.119 ci-dessus mentionnée. On pourra en particulier utiliser une voie ex-solvant à partir d'acétonitrile, de méthanol, de benzène, ou encore de tétrahydrofuranne.

Il en est de même pour la réalisation des électrodes, tant négative que positive.

Il est intéressant de noter que le choix des monomères selon l'invention présente l'avantage de permettre l'obtention de matériaux macromoléculaires possédant un poids moléculaire élevé, ce qui ne peut pas toujours être réalisé avec d'autres monomères.

L'invention sera mieux comprise et ses avantages apparaîtront plus clairement à la lecture des exemples suivants, lecture faite en référence aux dessins annexés dans lesquels:

— les figures 1a et 1b représentent des accumulateurs réalisés selon l'invention,

— les figures 2 à 4 représentent des courbes de décharge d'accumulateurs selon l'invention et d'accumulateurs selon l'art antérieur,

— la figure 5 représente des courbes de décharge d'un accumulateur selon l'art antérieur obtenues lors d'un cyclage,

— la figure 6 représente des courbes de décharge d'un accumulateur selon l'invention obtenues lors d'un cyclage,

— la figure 7 représente l'évolution de la cristallinité d'un copolymère d'oxyde d'éthylène en fonction de sa teneur en deuxième motif.

On a représenté sur la figure la un générateur électrochimique constitué par un électrode positive (1), un électrolyte (2) et une électrode négative (3), ces trois éléments étant réalisés selon l'invention, et deux plaques collectrices (5) et (6). Le générateur selon la figure 1b comporte des éléments identiques à ceux du générateur de la figure 1a, sauf en ce qui concerne l'électrode négative (7) qui est simplement constituée d'une couche de lithium.

Ces accumulateurs ont été utilisés pour la réalisation des exemples qui suivent et le composition et la nature des différents composants seront explicitées dans ces mêmes exemples.

Première série d'exemples

Ces exemples ont pour but d'illustrer l'amélioration des performances électrochimiques des générateurs réalisés conformément à l'invention. Pour cela, on compare un accumulateur dont le matériau mcromoléculaire est un polymère d'oxyde d'éthylène à un accumulateur dont le matériau macromoléculaire est un copolymère d'oxyde d'éthylène et de méthyl-glycidyl éther.

Les accumulateurs sont du type représentés figure 1a, c'est-à-dire que l'électrode négative et l'électrode positive sont toutes les deux des électrodes composites.

Le premier générateur comporte un électrolyte (2) constitué par un polyoxyde d'éthylène, de masse moléculaire 900.000 dans lequel est mis en solution du perchlorate de lithium en proportion telle que le rapport atomique oxygène sur lithium est 7. L'électrode positive (1) est une électrode composite comprenant un mélange de $Ti\ S_2$ (8), d'électrolyte (2) et de noir d'acétylène (9) à raison de 15% en volume de noir par rapport au volume de l'électrode. La proportion de $Ti\ S_2$ est de 40% en volume pour des diamètres de particules inférieurs à 35 microns. Cette électrode positive avait une capacité de 8 coulombs par $cm^2$.

L'électrode négative (3) est une électrode composite constituée par une poudre d'alliage lithium-aluminium de granulométrie identique à celle de la poudre de $Ti\ S_2$ utilisée pour l'électrode positive associée à l'électrolyte et à laquelle on a ajouté 15% en volume de noir d'acétylène. Cette électrode négative avait une capacité d'environ 20 $C/cm^2$.

La fabrication de l'électrolyte et des électrodes a été faite par voie ex-solvant.

Le générateur ainsi réalisé présente une surface totale de 3 $cm^2$ pour une épaisseur de 300 μ, l'épaisseur d'électrolyte étant d'environ 150 μ. Les deux collecteurs (5) et (6) étaient réalisés en acier inoxydable.

Le second générateur utilisé dans cet exemple comparatif est identique au premier sauf en ce que l'électrolyte est un matériau macromoléculaire à conduction ionique réalisé selon l'invention et comprend en tant que matériau macromoléculaire, un copolymère d'oxyde d'éthylène et de méthylglycidyléther comprenant en pourcentage molaire 97,5% d'oxyde d'éthylène et 2,5% de méthylglycidyléther. Ce copolymère a été obtenu par synthèse anionique et présente une masse moléculaire d'environ 700.000. Le perchlorate de lithium était présent avec un rapport O/Li = 7.

On a donc ainsi réalisé deux générateurs que l'on a fait décharger sous intensité constante (125 $\mu A/cm^2$), à une température voisine de 80°. Les courbes de décharges (tension de pile p/r temps) sont représentées figure 2 pour laquelle les abscisses représentent le temps de décharge en heures alors que les ordonnées représentent la différence de potentiel aux bornes de la pile.

La courbe A correspond à la décharge du générateur selon l'invention alors que la courbe B

correspond à celle du générateur pour lequel l'électrolyte est un homopolymère. On remarque que le générateur selon l'invention a atteint une tension de 1,30 volt au bout d'environ 6 heures 15, alors que le générateur à base d'homopolymère a atteint la même tension en seulement 4 heures. On a donc amélioré le temps de décharge d'environ 50%.

Les demandeurs pensent que cette nette amélioration des performances des accumulateurs ainsi réalisés est due aux meilleures propriétés de mouillage et d'adhérence conférées aux électrodes composites par le materiau selon l'invention.

Pour ces deux générateurs, on a effectué des cyclages (charge-décharge) à conditions identiques et l'on a remarqué que pour le générateur selon l'invention, le temps de décharge diminue moins vite au fur et à mesure des cycles que celui du générateur homopolymère.

Ce résultat confirme donc l'amélioration des propriétés d'adhérence et de mouillage et montre que l'utilisation du matériau selon l'invention minimise les problèmes de contact entre le matériau d'électrode et l'électrolyte. Ces problèmes sont essentiellement liés aux variations de volume des électrodes lors des charges et des décharges.

Deuxième série d'exemples.

Cette série est destinée à illustrer l'amélioration considérable des performances observées à température ambiante pour des accumulateurs dont l'électrolyte est constitué par un matériau selon l'invention.

Pour cela, on a représenté sur la figure 3 des courbes de décharge à intensité constante pour un accumulateur réalisé selon l'invention et un accumulateur selon l'art antérieur.

La courbe A de la figure 3 correspond à un accumulateur similaire à celui utilisé dans la première série d'exemples et comprenant une électrode négative composite à base d'alliage de lithium et d'aluminium d'une capacité approximative de 15 coulombs par $cm^2$ et une électrode positive composite à base de $Ti\ S_2$ de capacité égale à 10 coulombs par $cm^2$.

L'électrolyte est constitué d'un copolymère d'oxyde d'éthylène et de méthylglycidyléther (OE—MGE) comprenant 97,5% d'oxyde d'éthylène en pourcentage molaire et 2,5% de MGE dans lequel on a dissous du pechlorate de lithium en quantité suffisante pour obtenir un rapport atomique d'oxygène sur lithium égale à 12.

La surface totale de l'accumulateur est de 3 $cm^2$ et l'épaisseur de l'électrolyte de 85 μ. Le courant de décharge a été fixé égal à 100 μA.

La courbe B de cette même figure 3 correspond à une pile analogue à celle de la courbe A sauf en ce que l'électrolyte est constitué d'un polyoxyde d'éthylène de masse moléculaire 900.000 pour une épaisseur de 35 μ. La surface de la pile est de 85 $cm^2$ et le courant de décharge a été maintenu égal à 50 mA.

La comparaison des deux courbes amène les constatations suivantes.

Malgré des rapports de surface défavourables pour l'accumulateur A, la chute ohmique est plus faible pour celui-ci. Les chutes ohmiques sont représentées par les portions 10 et 11 des courbes A et B, ces portions étant sensiblement verticales. Ce résultat montre donc les bonnes propriétés d'adhérence et de mouillage de l'électrolyte selon l'invention qui favorise donc les contacts aux électrodes.

Les taux d'utilisation des réactifs, qui sont proportionnels à l'intégrale de chaque courbe varient sensiblement de 1 à 4 en faveur de l'accumulateur réalisé selon l'invention.

D'autre part, on a mesuré pour chacun de ces accumulateurs le courant instantané obtenu par mise en court circuit. Pour l'accumulateur de la figure A, on a obtenu 2 mA soit quatre fois plus que celui de la courbe B, ce qui permet de dire que pour des surfaces identiques, le courant de court circuit est multiplié par 100 du fait de l'utilisation de l'électrolyte selon l'invention.

On a stocké ces deux accumulateurs à 25°C pendant 3 mois et on n'a observé aucun signe de démixion pour l'accumulateur correspondant à la figure 4 alors que celui de la courbe B présente des signes de démixion visibles à l'oeil nu.

Troisième série d'exemples

Cette série est destinée à illustrer l'effet bénéfique résultant de l'usage du matériau selon l'invention pour réaliser une pile non rechargeable fonctionnant à température ambiante (de l'ordre de 23°C).

On a réalisé trois piles E, F et G. Elles comprennent chacune une électrode positive composite comprenant approximativement 20% en volume de $M_nO_2$ et 10% en volume de noir d'acétylène et présentant une capacité de 5 coulombs pour une surface de 3 $cm^2$.

La pile E comprenait une électrode négative constituée par un feuillard de lithium d'environ 100 d'épaisseur. Le matériau macromoléculaire constituant l'électrolyte et utilisé pour réaliser le composite de l'électrode positive, était constitué par un copolymère anionique OE—MGE à 95% d'OE et 5% MGE — pourcentage molaire — de masse moléculaire 500.000 et contenant $Li\ ClO_4$ dans un rapport atomique O/Li = 8. L'électrolyte avait une épaisseur de 85 microns.

On a représenté sur la figure 4, la courbe de décharge de cette pile (courbe E) pour une intensité de courant fixée à 50 μA.

La pile F comprenait les mêmes éléments, mais le matériau macromoléculaire était un polyoxyde d'éthylène de masse moléculaire 900.000. Cette pile s'est avérée inutilisable à la température de 23°C puisque, pour la même intensité de décharge que la pile E (50 μA), le voltage tombe à zéro V après

seulement quelques secondes de fonctionnement. On n'a donc pas tracé de courbe de décharge.

La pile G est identique à la pile E sauf en ce qui concerne l'électrode négative où le feuillard de lithium est remplacé par un alliage de lithium aluminium finement dispersé tel que utilisé dans la première série d'exemples. Cette pile a été déchargée avec un courant de 100 µA et de la courbe de décharge est représentée figure 4 par la référence G.

Quand on compare la courbe E et la courbe G, on remarque que le taux d'utilisation pour les intensités de décharge identiques est sensiblement deux fois supérieur pour la pile G. On a donc montré que l'un des intérêts du matériau macromoléculaire à conduction ionique, selon l'invention réside dans la réalisation de piles électrochimiques pour lesquelles les électrodes sont des électrodes composites.

Le fait que la pile G présente un taux d'utilisation nettement supérieur à celui de la pile E est assez surprenant si l'on considère que la décharge de la pile G a eu lieu sous une intensité de courant double à celle de la pile E. En effet, il est couramment admis que pour avoir un taux élevé d'utilisation des réactifs, on doit en général se limiter à des courants de décharge relativement faibles. Or l'invention permet d'obtenir un taux d'utilisation élevé avec une forte intensité de décharge.

Quatrième série d'exemples

On a réalisé des accumulateurs identiques à ceux utilisés pour la deuxième série d'exemples, mais dans lesquels les matériaux macromoléculaires étaient différents en pourcentage molaire OE/MGE et représentés dans le tableau ci-après.

On a fait décharger chaque accumulateur selon une intensité constante égale à 50 µA. On a constaté que pour les piles H, I, J, le taux de décharge était similaire à celui de la pile OE—MGE de l'exemple II, alors que celui de la pile K était fortement comparable à une pile témoin, de mêmes constituants, mais pour laquelle le matériau macromoléculaire était un homopolymère de méthylglycidyléther, la pile H donnant le meilleur résultat.

| NUMERO | MATERIAU MACRO | % OE | % MGE |
|---|---|---|---|
| H | OE - MGE | 90 | 10 |
| I | OE - MGE | 98 | 2 |
| J | OE - MGE | 80 | 20 |
| K | OE - MGE | 70 | 30 |

Cinquième série d'exemples

Cette série d'exemples est relative à une pile pour laquelle le matériau macromoléculaire est un copolymère d'oxyde d'éthylène et d'oxyde de propylène.

Une telle pile a été comparée à une pile témoin pour laquelle le matériau macromoléculaire est un POE.

Pile témoin — L'anode est un feuillard de lithium, l'électrolyte est un matériau macromoléculaire à conduction ionique constitué par du perchlorate de lithium en solution dans un polyoxyde d'éthylène de masse moléculaire égale à 300.000, le rapport atomique de lithium par rapport à l'oxygène du polymère est de 1/12. L'électrode positive est une électrode composite composée de $MoO_2$ en tant que matériau actif de noir d'acétylène et du matériau macromoléculaire de l'électrolyte.

La pile selon l'invention est identique sauf en ce que la matériau macromoléculaire à conduction ionique est un copolymère d'oxyde d'éthylène et d'oxyde de propylène, comprenant 3% molaire d'oxyde de propylène et de masse moléculaire égale à 200.000.

Les deux piles ont été soumises à des cycles charge-décharge à une température de l'ordre de 80°C et pour une intensité de courant constante telle que théoriquement, la décharge de la pile soit obtenue en dix heures (C/10).

Pour la pile témoin, on a obtenu 80% de la capacité théorique au bout de 12 cycles, alors que pour la pile selon l'invention, on a pu obtenir 15 cycles à 100% de la capacité théorique.

Pour cette même pile, on a pu obtenir 15 cycles avec 100% de la capacité théorique à C/5 et 12 cycles à 50% pour C/2. On a donc montré que les copolymères d'oxyde d'éthylène et d'oxyde de propylène permettent de réaliser des piles présentant d'excellentes caractéristiques, et que ces piles conservent leur intégrité lors des cycles de charge et décharge, ce qui peut être dû aux bonnes propriétés d'adhérence du matériau et à son caractère collant qui améliore alors nettement les contacts et l'enrobage des grains du composite de l'électrode positive.

Sixième série d'exemples

Dans cette série, on a comparé au cyclage une pile selon l'invention et une pile témoin, à 80°C.

La pile selon l'invention comportait une anode de lithium, un électrolyte constitué par du perchlorate de lithium, en solution dans un copolymère d'oxyde d'éthylène et de méthyl glycidyléther (3% molaire), avec un rapport d'oxygène sur lithium égal à 8. L'électrode positive est un composite réalisé à partir de bioxyde de molybdène, de noir d'acétylène et d'électrolyte. Pour la pile témoin, on a utilisé les mêmes éléments mais le matériau macromoléculaire était un polyoxyde d'éthylène. Ces deux piles ont été soumises à des cycles de charge et décharge, à intensité constante telle que, théoriquement, la décharge de la pile soit obtenue en 10 heures (C/10). On a représenté sur les figures 5 et 6 les variations de la tension de décharge en fonction du temps pour un certain nombre de cycles, le chiffre en repère indiquant le nombre de cycles effectués. La tension est en volts et le temps en heures. On remarque que pour la pile témoin, figure 5, le temps au bout duquel la tension de décharge atteint la valeur de 1 volt diminue rapidement avec le nombre de cycles, alors que pour la pile selon l'invention, il reste sensiblement constant bien que l'on ait effectué quinze cycles au lieu de douze.

Septième série d'exemples

On a finalement testé des matériaux à base d'oxyde d'éthylène et d'oxyde de propylène d'une manière identique à la quatrième série d'exemples et on s'est aperçu qu'à partir de 20% d'oxyde de propylène (pourcentage molaire) les caractéristiques des piles ne sont plus supérieures à celles d'une pile à base d'homopolyoxyde d'éthylène.

Huitième exemple

Dans cet exemple, on étudie comme matériau macromoléculaire un copolymère d'oxyde d'éthylène et d'époxy butane

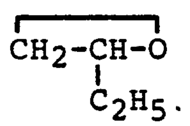

Pour cela, on réalise un générateur rechargeable ayant les caractéristiques suivantes:

— électrode négative: feuillard de lithium

— électrolyte: copolymère d'oxyde d'éthylène et d'époxy butane, (95% en masse d'oxyde d'éthylène) de poids moléculaire égal à 400.000, et comportant en solution du perchlorate de lithium dans un rapport atomique de 12/1,

— électrode positive: électrode composite réalisée à partir de dioxyde de molybdène $MoO_2$ (20% en volume) de copolymère oxyde d'éthylène méthylglycidyléther (73% en volume) et de noir de carbone (7% en volume).

Les performances obtenues sont les suivantes: 35% d'utilisation pour une décharge de 7 $\mu A/cm^2$ à 30°C, soit C/50.

Quand on compare la courbe de décharge de cette pile à une courbe de décharge obtenue avec une pile dont l'électrolyte est un copolymère oxyde d'éthylène, oxyde de propylène, on remarque que les deux copolymères se comportent d'une manière identique puisque les courbes sont similaires et présentent les mêmes paliers.

Neuvième exemple

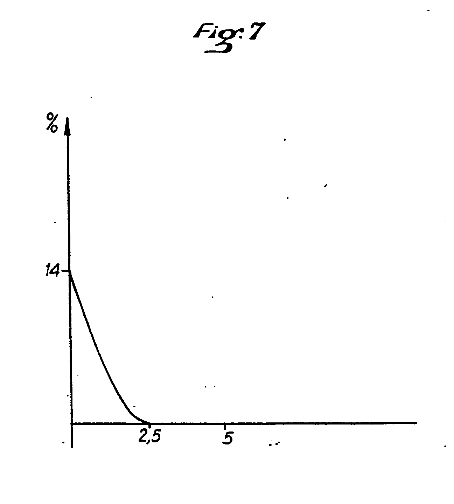

De façon à fixer la concentration minimale du deuxième motif dans le matériau, on a représenté sur la figure 7 la variation de la cristallinité (mesurée en %) d'un copolymère OE—MGE en fonction de la concentration molaire en MGE. Le sel utilisé était le perchlorate de lithium, et le rapport atomique de lithium par rapport à l'oxygène du copolymère était de 1/8, la cristallinité étant mesurée à 23°C.

On s'aperçoit que la cristallinité du complex diminue de 14% quand on part de zéro % de MGE jusqu'à 0% quand on a 2,5% molaire de MGE.

Ce résultat est comparable à celui obtenu pour un POE sans sel dont la cristallinité est de 70% environ et pour un copolymère OE/MGE (2,5% molaire MGE) sans sels pour lequel la cristallinité est d'environ 15%.

En outre, en utilisant $LiCF_3SO_3$ qui donne en général des complexes plus cristallins, il faut augmenter le pourcentage de MGE dans le copolymère au-dessus de 5% molaire pour réduire la cristallinité. En ce qui concerne $LiCF_3SO_3$, on a réalisé une pile avec un copolymère OE—MGE à 10% molaire de MGE, avec un rapport O/Li = 7 et on a vérifié qu'à 80°C, cette pile présentait les mêmes qualités que celles pour lesquelles l'anion est un perchlorate.

Ces exemples ne sont donnés qu'à titre d'illustration des avantages conférés par le matériau macromoléculaire de l'invention. Leurs résultats ne sauraient être considérés comme limitatifs et certains de leurs paramètres pourraient être optimisés sans sortir du cadre de l'invention. Ainsi, l'invention n'est nullement limitée aux modes de réalisation qui précèdent, mais elle en englobe, au contraire, toutes les variantes.

**Revendications**

1. Matériau à conduction ionique constitué par une solution solide d'au moins un composé ionique dissous au sein d'un matériau macromoléculaire présentant une structure de polyéther, ledit matériau macromoléculaire consistant en un copolymère de l'oxyde d'éthylène et d'au moins un deuxième motif constitué par un éther cyclique choisi dans le groupe formé des éthers cycliques, substitués ou non, dont le cycle comporte plus de trois maillons et des éthers cycliques substitués de formule:

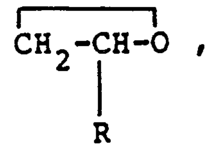

dans laquelle R est soit un radical Ra choisi parmi les radicaux alkyles ou alcényles en $C_1$ à $C_{12}$ et de préférence en $C_1$ à $C_4$, soit un radical $—CH_2—O—Re—Ra$, dans lequel Ra a la même signification que ci-dessus et Re représente un radical polyéther de formule $-(CH_2—CH_2—O)_p-$, p variant de 0 à 10, ledit copolymère renfermant une proportion molaire globale de deuxième(s) motif(s) allant de 1,5 à 30%.

2. Matériau à conduction ionique selon la revendication 1, où le deuxième motif du copolymère est choisi parmi les éthers cycliques de formule:

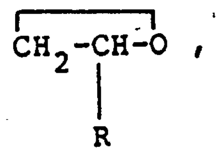

où R est un radical Ra alkyle et en ce que la proportion molaire de deuxième(s) motifs(s) dans le copolymère est au plus égale à 25%.

3. Matériau à conduction ionique selon la revendication 3, où le radical R est un radical méthyl ou éthyle.

4. Matériau à conduction ionique selon la revendication 2 ou 3, où le composé ionique est le perchlorate de lithium et la proportion molaire de deuxième(s) motif(s) dans le copolymère est comprise entre 1,5% et 25%.

5. Matériau à conduction ionique selon la revendication 2 ou 3, où le composé ionique est le trifluorométhanesulfonate de lithium et la proportion molaire de deuxième(s) motif(s) dans le compolymère est supérieure à 5%.

6. Matériau à conduction ionique selon la revendication 1, où le deuxième motif du copolymère est choisi parmi les éthers cycliques de formule

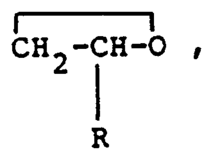

où R est un radical $—CH_2—O—Re—Ra$.

7. Matériau à conduction ionique selon la revendication 6, où le radical R est $—CH_2—O—CH_3$, $—CH_2—O—CH=CH_2$ ou $—CH_2—O—CH_2—CH=CH_2$.

8. Matériau à conduction ionique selon la revendication 6 ou 7, où le composé ionique est le perchlorate de lithium.

9. Matériau à conduction ionique selon la revendication 6 ou 7, où le composé ionique est le trifluorométhanesulfonate de lithium et la proportion molaire de deuxième(s) motif(s) dans le copolymère est supérieure à 5%.

10. Matériau à conduction ionique selon la revendication 1, où le deuxième motif est choisi parmi l'oxétanne, le tétrahydrofuranne, le dioxolanne, le dioxanne et leurs dérivés substitués.

11. Matériau à conduction ionique selon l'une des revendications 1 à 10, où le ou les copolymères qu'il renferme présentent un poids moléculaire supérieur à 50 000.

12. Matériau macromoléculaire selon la revendication 11, où ledit poids moléculaire est compris entre 100 000 et 1 000 000.

13. Matériau d'électrode pour la réalisation d'accumulateurs électrochimiques comprenant un mélange d'au moins un matériau électrochimiquement actif, de noir de carbone et d'un matériau à conduction ionique constitué par une solution solide d'au moins un composé ionique dissous au sein d'un matériau macromoléculaire présentant une chaîne du type polyéther, où ledit matériau macromoléculaire

consiste en un copolymère de l'oxyde d'éthylène et d'au moins un deuxième motif constitué par un éther cyclique choisi dans le groupe formé des éthers cycliques, substitués ou non, dont le cycle comporte plus de trois maillons et des éthers cycliques substitués de formule

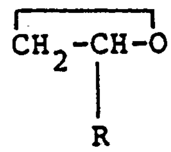 ,

dans laquelle R est soit un radical Ra choisi parmi les radicaux alkyles ou alcényles en $C_1$ à $C_{12}$ et de préférence en $C_1$ à $C_4$, soit un radical $-CH_2-O-Re-Ra$, dans lequel Ra a la même signification que ci-dessus et Re représente un radical polyéther de formule $-(CH_2-CH_2-O)_p-$, p variant de 0 à 10, et où ledit copolymère renferme une proportion molaire globale de deuxième(s) motif(s) allant de 1,5 à 30%.

14. Matériau d'électrode selon la revendication 13, où le radical R est un radical Ra alkyle et où la proportion molaire de deuxième(s) motif(s) dans le copolymère est au plus égale à 25%.

15. Matériau d'électrode selon la revendication 14, où le radical R est un radical méthyl ou éthyle.

16. Matériau d'électrode selon la revendication 14 ou 15, où le composé ionique est le perchlorate de lithium et la proportion molaire de deuxième(s) motif(s) dans le copolymère est comprise entre 1,5% et 25%.

17. Matériau d'électrode selon la revendication 14 ou 15, où le composé ionique est le trifluorométhanesulfonate de lithium et la proportion molaire de deuxième(s) motif(s) dans le copolymère est supérieure à 5%.

18. Matériau d'électrode selon la revendication 13, où le radical R est un radical $-CH_2-O-Re-Ra$.

19. Matériau d'électrode selon la revendication 18, où le radical R est $-CH_2-O-CH_3$, $-CH_2-O-CH=CH_2$ ou $-CH_2-O-CH_2-CH=CH_2$.

20. Matériau d'électrode selon la revendication 18 ou 19, où le composé ionique est le perchlorate de lithium.

21. Matériau d'électrode selon la revendication 18 ou 19, où le composé ionique est le trifluorométhanesulfonate de lithium et la proportion molaire de deuxième(s) motif(s) dans le copolymère est supérieure à 5%.

22. Matériau d'électrode selon la revendication 13, où le deuxième motif est choisi parmi l'oxétanne, le tétrahydrofuranne, le dioxanne, le dioxolanne et leurs dérivés substitués.

23. Matériau d'électrode selon l'une des revendications 13 à 22, où le ou les copolymères qu'il renferme présentent un poids moléculaire supérieur à 50 000.

24. Matériau d'électrode selon la revendication 23, où ledit poids moléculaire est compris entre 100 000 et 1 000 000.

25. Solution solide d'au moins un composé ionique dissous au sein d'un matériau macromoléculaire, où ledit matériau macromoléculaire consiste en un copolymère de l'oxyde d'éthylène et d'au moins un deuxième motif constitué par un éther cyclique choisi dans le groupe formé des éthers cycliques, substitués ou non, dont le cycle comporte plus trois maillons et des éthers cycliques substitués de formule

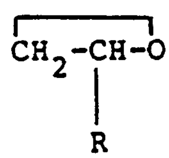 ,

dans laquelle R est soit un radical Ra choisi parmi les radicaux alkyles ou alcényles en $C_1$ à $C_{12}$ et de préférence en $C_1$ à $C_4$, soit un radical $-CH_2-O-Re-Ra$, dans lequel Ra à la même signification que ci-dessus et Re représente un radical polyéther de formule $-(CH_2-CH_2-O)_p-$, p variant de 0 à 10 et en ce que ledit copolymère renferme une proportion molaire globale de deuxième(s) motif(s) telle que ladite solution solide comporte une phase amorphe.

26. Solution solide selon la revendication 25, où le deuxième motif du copolymère est choisi parmi les éthers cycliques de formule

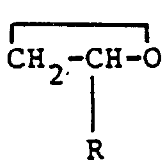 ,

dans laquelle R est un radical méthyle ou éthyle ou un radical choisi parmi $-CH_2-O-CH_3$, $-CH_2-O-CH=CH_2$ et $-CH_2-O-CH_2-CH=CH_2$.

27. Solution solide selon la revendication 25, où le deuxième motif du copolymère est choisi parmi l'oxétanne, le tétrahydrofuranne, le dioxolanne, le dioxanne et leurs dérivés substitués.

28. Solution solide selon l'une des revendications 25 à 27, où le ou les composés ioniques dissous au sein du matériau macromoléculaire sont choisis dans le groupe formé des sels de lithium et des sels de sodium.

29. Solution solide selon l'une des revendications 25 à 28, où la mase moléculaire du ou des copolymères formant le matériau macromoléculaire de la solution solide est supérieure à 50 000 et de préférence comprise entre 100 000 et 1 000 000.

30. Matériau à conduction ionique selon la revendication 1, où le ou les composés ioniques dissous au sein du matériau macromoléculaire sont choisis dans le groupe formé des sels de lithium et les sels de sodium.

31. Matériau d'électrode selon la revendication 13, où le ou les composés ioniques dissous au sein du matériau macromoléculaire sont choisis dans le groupe formé des sels de lithium et des sels de sodium.

## Patentansprüche

1. Material mit Ionenleitung, zusammengesetzt aus einer festen Lösung wenigstens einer Ionenverbindung, die in einem makromolekularen Material gelöst ist, das eine Polyetherstruktur aufweist, wobei das makromolekulare Material aus einem Copolymerisat aus Ethylenoxid und wenigstens einer zweiten Gruppe besteht, die durch einen cyclischen Ether gebildet ist, ausgewählt aus einer Gruppe, die aus substituierten oder nichtsubstituierten cyclischen Ethern, deren Ring mehr als 3 Kettenglieder umfaßt, und aus substituierten cyclischen Ethern der Formel

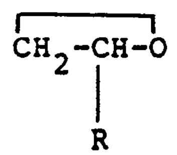 ,

besteht, worin R ein Rest Ra ist, ausgewählt unter $C_{1-12}$- und vorzugsweise $C_{1-4}$-Alkyl- oder -Alkenylresten, oder ein Rest $—CH_2—O—Re—Ra$, worin Ra dieselbe Bedeutung wie oben angegeben hat und Re einen Polyetherrest der Formel $-(CH_2—CH_2—O)_p-$ darstellt, wobei p einen Wert zwischen 0 und 10 aufweist und wobei das Copolymerisat einen Gesamtmolaranteil der zweiten Gruppe(n) von 1,5 bis 30% ausmacht.

2. Material mit Ionenleitung nach Anspruch 1, worin die zweite Gruppe des Copolymerisats ausgewählt ist unter den cyclischen Ethern der Formel

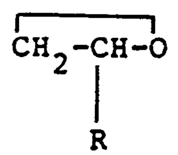 ,

worin R ein Alkylrest Ra ist, und der Molaranteil der zweiten Gruppe(n) im Copolymerisat höchstens 25% beträgt.

3. Material mit Ionenleitung nach Anspruch 2, worin der Rest R ein Methyl- oder Ethylrest ist.

4. Material mit Ionenleitung nach Anspruch 2 oder 3, worin die Ionenverbindung Lithiumperchlorat ist und der Molaranteil der zweiten Gruppe(n) im Copolymerisat 1,5 bis 25% beträgt.

5. Material mit Ionenleitung nach Anspruch 2 oder 3, worin die Ionenverbindung Lithiumtrifluormethansulfonat ist und der Molaranteil der zweiten Gruppe(n) im Copolymerisat über 5% beträgt.

6. Material mit Ionenleitung nach Anspruch 1, worin die zweite Gruppe des Copolymerisats ausgewählt ist unter den cyclischen Ethern der Formel

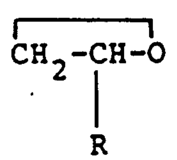 ,

worin R einen Rest $—CH_2—O—Re—Ra$ bedeutet.

7. Material mit Ionenleitung nach Anspruch 6, worin R $—CH_2—O—CH_3$, $—CH_2—O—CH{=}CH_2$ oder $—CH_2—O—CH_2—CH{=}CH_2$ bedeutet.

8. Material mit Ionenleitung nach Anspruch 6 oder 7, worin die Ionenverbindung Lithiumperchlorat ist.

9. Material mit Ionenleitung nach Anspruch 6 oder 7, worin die Ionenverbindung

Lithiumtrifluormethansulfonat ist und der Molaranteil der zweiten Gruppe(n) im Copolymerisat über 5% beträgt.

10. Material mit Ionenleitung nach Anspruch 1, worin die zweite Gruppe ausgewählt ist unter Oxetan, Tetrahydrofuran, Dioxolan, Dioxan und ihren substituierten Derivaten.

11. Material mit Ionenleitung nach einem der Ansprüche 1 bis 10, worin das oder die Copolymerisate, das oder die es enthält, ein Molekulargewicht von über 50.000 aufweisen.

12. Makromolekulares Material nach Anspruch 11, worin sich das Molekulargewicht zwischen 100.000 und 1.000.000 bewegt.

13. Elektrodenmaterial für die Herstellung von elektrochemischen Akkumulatoren, das ein Gemisch aus wenigstens einem elektrochemisch aktiven Material, Ruß und einem Material mit Ionenleitung umnfaßt, das aus einer festen Lösung wenigstens einer Ionenverbindung zusammengesetzt ist, die in einem makromolekularen Material gelöst ist, das eine Kette vom Typ Polyether darstellt, wobei das makromolekulare Material aus einem Copolymerisat aus Ethylenoxid und wenigstens einer zweiten Gruppe besteht, die durch einen cyclischen Ether gebildet ist, ausgewählt aus einer Grupe, die aus substituierten oder nichtsubstituierten cyclischen Ethern, deren Ring mehr als 3 Kettenglieder umfaßt, und aus substituierten cyclischen Ethern der Formel

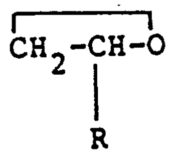 ,

besteht, worin R ein Rest Ra ist, ausgewählt unter $C_{1-12}$- und vorzugweise $C_{1-4}$-Alkyl- oder -Alkenylresten, oder ein Rest $—CH_2—O—Re—Ra$, worin Ra dieselbe Bedeutung wie oben angegeben hat und Re einen Polyether est der Formel $-(CH_2—CH_2—O)_p-$, darstellt, wobei p einen Wert zwischen 0 und 10 aufweist und wobei das Copolymerisat einen Gesamtmolaranteil der zweiten Gruppe(n) von 1,5 bis 30% ausmacht.

14. Elektrodenmaterial nach Anspruch 13, worin R ein Alkylrest Ra ist, und der Molaranteil der zweiten Gruppe(n) im Copolymerisat höchstens 25% beträgt.

15. Elektrodenmaterial nach Anspruch 14, worin der Rest R einen Methyl- oder Ethylrest bedeutet.

16. Elektrodenmaterial nach Anspruch 14 oder 15, worin die Ionenverbindung Lithiumperchlorat ist und der Molaranteil der zweiten Gruppe(n) im Copolymerisat 1,5 bis 25% beträgt.

17. Elektrodenmaterial nach Anspruch 14 oder 15, worin die Ionenverbindung Lithiumtrifluormethansulfonat ist und der Molaranteil der zweiten Gruppe(n) im Copolymerisat über 5% beträgt.

18. Elektrodenmaterial nach Anspruch 13, worin der Rest R ein Rest $—CH_2—O—Re—Ra$ ist.

19. Elektrodenmaterial nach Anspruch 18, worin der Rest R $—CH_2—O—CH_3$, $—CH_2—O—CH{=}CH_2$ oder $—CH_2—O—CH_2—CH{=}CH_2$ bedeutet.

20. Elektrodenmaterial nach Anspruch 18 oder 19, worin die Ionenverbindung Lithiumperchlorat ist.

21. Elektrodenmaterial nach Anspruch 18 oder 19, worin die Ionenverbindung Lithiumtrifluormethansulfonat ist und der Molaranteil der zweiten Gruppe(n) im Copolymerisat höher als 5% ist.

22. Elektrodenmaterial nach Anspruch 13, worin die zweite Gruppe ausgewählt ist unter Oxetan, Tetrahydrofuran, Dioxan, Dioxolan und ihren substituierten Derivaten.

23. Elektrodenmaterial nach einem der Ansprüche 13 bis 22, worin das oder die Copolymerisate, das oder die es enthält, ein Molekulargewicht von über 50.000 aufweisen.

24. Elektrodenmaterial nach Anspruch 23, worin sich das Molekulargewicht zwischen 100.000 und 1.000.000 bewegt.

25. Feste Lösung aus wenigstens einer in einem makromolekularen Material gelösten Ionenverbindung, wobei das makromolekulare Material aus einem Copolymerisat aus Ethylenoxid und wenigstens einer zweiten Gruppe besteht, die durch einen cyclischen Ether gebildet ist, ausgewählt aus einer Gruppe, die aus substituierten oder nichtsubstituierten cyclischen Ethern, deren Ring mehr als 3 Kettenglieder umfaßt, und aus substituierten cyclischen Ethern der Formel

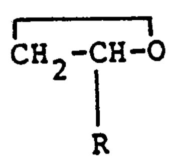 ,

besteht, worin R ein Rest Ra ist, ausgewählt unter $C_{1-12}$- und vorzugsweise $C_{1-4}$-Alkyl- oder -Alkenylresten, oder ein Rest $—CH_2—O—Re—Ra$, worin Ra dieselbe Bedeutung wie oben angegeben hat und Re einen Polyetherrest der Formel $-(CH_2—CH_2—O)_p-$, darstellt, wobei p einen Wert zwischen 0 und 10 aufweist und wobei das Copolymerisat einen solchen Gesamtmolaranteil der zweiten Gruppe(n) aufweist, daß die feste Lösung eine amorphe Phase enthält.

26. Feste Lösung nach Anspruch 25, worin die zweiten Gruppe des Copolymerisats ausgewählt ist aus den cyclischen Ethern der Formel

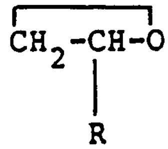 ,

worin R ein Methyl- oder Ethylrest ist oder ein Rest, ausgewählt unter $—CH_2—O—CH_3$, $—CH_2—O—CH=CH_2$ und $—CH_2—O—CH_2—CH=CH_2$.

27. Feste Lösung nach Anspruch 25, worin die zweite Gruppe des Copolymerisats ausgewählt ist unter Oxetan, Tetrahydrofuran, Dioxolan, Dioxan und ihren substituierten Derivaten.

28. Feste Lösung nach einem der Ansprüche 25 bis 27, worin die in dem makromolekularen Material gelöste(n) Ionenverbindung(en) ausgewählt ist (sind) aus der Gruppe, bestehend aus Lithium- und Natriumsalzen.

29. Feste Lösung nach einem der Ansprüche 25 bis 28, worin die Molekularmasse des oder der das makromolekulare Material der festen Lösung bildende(n) Copolymerisat(e) über 50.000 und vorzugsweise zwischen 100.000 und 1.000.000 beträgt.

30. Material mit Ionenleitung nach Anspruch 1, worin die im makromolekularen Material gelöste(n) Ionenverbindung(en) ausgewählt sind aus der Gruppe, bestehend aus Lithium- und Natriumsalzen.

31. Elektrodenmaterial nach Anspruch 13, worin die im makromolekularen Material gelösten Ionenverbindungen ausgewählt sind aus der Gruppe, bestehend aus Lithium- und Natriumsalzen.

**Claims**

1. Ionic conductive material consisting of a solid solution of at least one ionic compound dissolved within a macromolecular material having a polyether structure, the said macromolecular material consisting of a copolymer of ethylene oxide and of at least one second structural unit consisting of a cyclic ether selected from the group formed of substituted or non-substituted cyclic ethers, of which the ring comprises more than three links, and the substituted cyclic ethers having the formula:

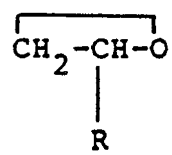 ,

in which R is either a radical Ra selected from $C_1$ to $C_{12}$ and preferably $C_1$ to $C_4$ alkyl or alkenyl radicals or a $—CH_2—O—Re—Ra$ radical, in which Ra has the same meaning as above and Re represents a polyether radical having the formula $-(CH_2—CH_2—O)_p-$, with p varying from 0 to 10, the said copolymer containing a global molar proportion of a second structural unit or second structural units ranging from 1.5 to 30%.

2. Ionic conductive material as claimed in Claim 1, wherein the second structural unit of the copolymer is selected from cyclic ethers having the formula:

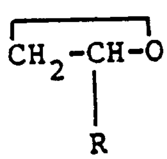 ,

wherein R is an alkyl Ra radical, and in that the molar proportion of second structural unit(s) in the copolymer is at most 25%.

3. Ionic conductive material as claimed in Claim 2, wherein the radical R is a methyl or ethyl radical.

4. Ionic conductive material as claimed in Claim 2 or 3, wherein the ionic compound is lithium perchlorate and the molar proportion of second structural unit(s) in the copolymer is between 1.5 and 25%.

5. Ionic conductive material as claimed in Claim 2 or 3, wherein the ionic compound is lithium trifluoromethanesulphonate and the molar proportion of second structural unit(s) in the copolymer is greater than 5%.

6. Ionic conductive material as claimed in Claim 1, wherein the second structural unit of the copolymer is selected from cyclic ethers having the formula

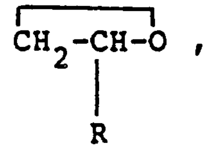

wherein R is a $—CH_2—O—Re—Ra$ radical.

7. Ionic conductive material as claimed in Claim 6, wherein the radical R is $—CH_2—O—CH_3$, $—CH_2—O—CH=CH_2$ or $—CH_2—O—CH_2—CH=CH_2$.

8. Ionic conductive material as claimed in Claim 6 or 7, wherein the ionic compound is lithium perchlorate.

9. Ionic conductive material as claimed in Claim 6 or 7, wherein the ionic compound is lithium trifluoromethanesulphonate and the molar proportion of second structural unit(s) in the copolymer is greater than 5%.

10. Ionic conductive material as claimed in Claim 1, wherein the second structural unit is selected from oxetane, tetrahydrofurane, dioxolane, dioxane and substituted derivatives of them.

11. Ionic conductive material as claimed in one of Claims 1 to 10, wherein the copolymer(s) which it contains has/have a molecular weight greater than 50 000.

12. Macromolecular material as claimed in Claim 11, wherein the said moelcular weight is between 100 000 and 1 000 000.

13. Electrode material for producing electrochemical accumulators comprising a mixture of at least one electrochemically active material, carbon black and an ionic conductive material consisting of a solid solution of at least one ionic compound dissolved within a macromolecular material having a polyether type chain, wherein the said macromolecular material consists of a copolymer of ethylene oxide and of at least one second structural unit consisting of a cyclic ether selected from the group consisting of substituted or non-substituted cyclic ethers, the ring of which comprises more than three links and substituted cyclic ethers having the formula:

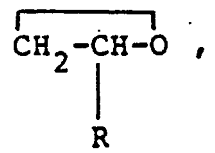

in which R is either an Ra radical selected from $C_1$ to $C_{12}$, and preferably from $C_1$ to $C_4$, alkyl or alkenyl radicals or a $—CH_2—O—Re—Ra$ radical, in which Ra has the same meaning as above and Re represent a polyether radical having the formula $-(CH_2—CH_2—O)_p-$, with p varying from 0 to 10, and wherein the said copolymer has an overall molar proportion of second structural unit(s) between 1.5 and 30%.

14. Electrode material as claimed in Claim 13, wherein the radical R is an alkyl Ra radical and wherein the molar proportion of second structural unit(s) in the copolymer is at most 25%.

15. Electrode material as claimed in Claim 14, wherein the radical R is a methyl or ethyl radical.

16. Electrode material as claimed in Claim 14 or 15 wherein the ionic compound is lithium perchlorate and the molar proportion of second structural unit(s) in the copolymer is between 1.5 and 25%.

17. Electrode material as claimed in Claim 14 or 15, wherein the ionic compound is lithium trifluoromethanesulphonate and the molar porportion of second structural unit(s) in the copolymer is greater than 5%.

18. Electrode material as claimed in Claim 13, wherein the radical R is a $—CH_2—O—Re—Ra$ radical.

19. Electrode material as claimed in Claim 18, wherein the radical R is $—CH_2—O—CH_3$, $—CH_2—O—CH=CH_2$ or $—CH_2—O—CH_2—CH=CH_2$.

20. Electrode material as claimed in Claim 18 or 19, wherein the ionic compound is lithium perchlorate.

21. Electrode material as claimed in Claim 18 or 19, wherein the ionic compound is lithium trifluoromethanesulphonate and the molar proportion of second structural unit(s) in the copolymer is greater than 5%.

22. Electrode material as claimed in Claim 13, wherein the second structural unit is selected from oxetane, tetrahydrofurane, dioxane, dioxoane and substituted derivatives thereof.

23. Electrode material as claimed in one of Claims 13 to 22, wherein the copolymer(s) which it includes has/have a molecular weight greater than 50 000.

24. Electrode material as claimed in Claim 23, wherein the said molecular weight is between 100 000 and 1 000 000.

25. Solid solution of at least one ionic compound dissolved within a macromolecular material, wherein the said macromolecular material consists of a copolymer of ethylene oxide and of at least one second structural unit consisting of a cyclic ether selected from the group consisting of substituted or non-substituted cyclic ethers, the ring of which comprising more than three links and the substituted cyclic ethers having the formula

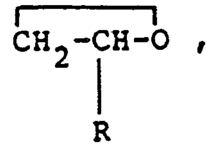

in which R is either an Ra radical selected from $C_1$ to $C_{12}$ and preferably from $C_1$ to $C_4$, alkyl or alkenyl radicals or a $-CH_2-O-Re-Ra$ radical, in which Ra has the same meaning as above and Re represents a polyether radical having the formula $-(CH_2-CH_2-O)_p-$, with p varying from 0 to 10, and in that the said copolymer has an overall molar proportion of second structural unit(s) such that the said solid solution comprises an amorphous phase.

26 Solid solution as claimed in Claim 25, wherein the second structural unit of the copolymer is selected from the cyclic ethers having the formula

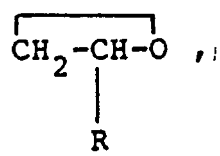

in which R is a methyl or ethyl radical or a radical selected from $-CH_2-O-CH_3$, $-CH_2-O-CH=CH_2$ and $-CH_2-O-CH_2-CH=CH_2$.

27. Solid solution as claimed in Claim 25, wherein the second structural unit of the copolymer is selected from oxetane, tetrahydrofurane, dioxolane, dioxane and substituted derivatives thereof.

28. Solid solution as claimed in one of Claims 25 to 27, wherein the ionic compound(s) dissolved within the macromolecular material is/are selected from the group consisting of lithium salts and sodium salts.

29. Solid solution as claimed in one of Claims 25 to 28, wherein the molecular weight of the copolymer(s) forming the macromolecular material of the solid solution is greater than 50 000, and preferably between 100 000 and 1 000 000.

30. Ionic conductive material as claimed in claim 1, wherein the ionic compound(s) dissolved within the macromolecular material is/are selected from the group consisting of lithium salts and sodium salts.

31. Electrode material as claimed in Claim 13, wherein the ionic compound(s) dissolved within the macromolecular material is/are selected from the group consisting of lithium salts and sodium salts.

Fig:1a

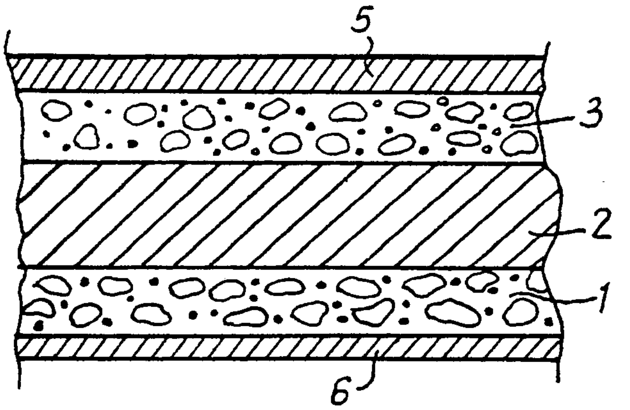


Fig:1b

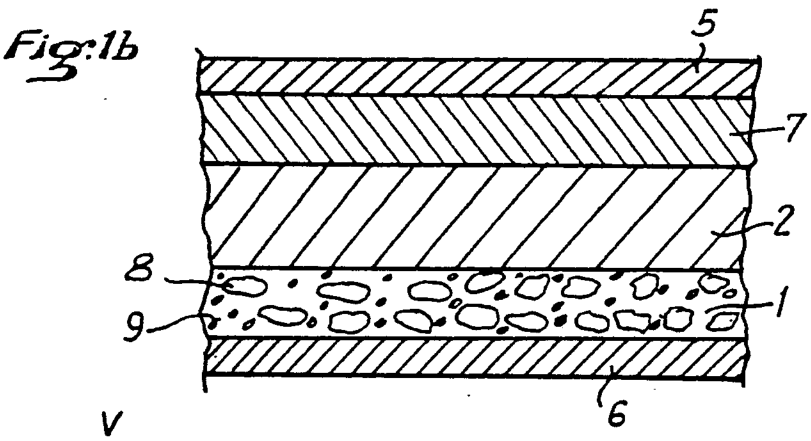


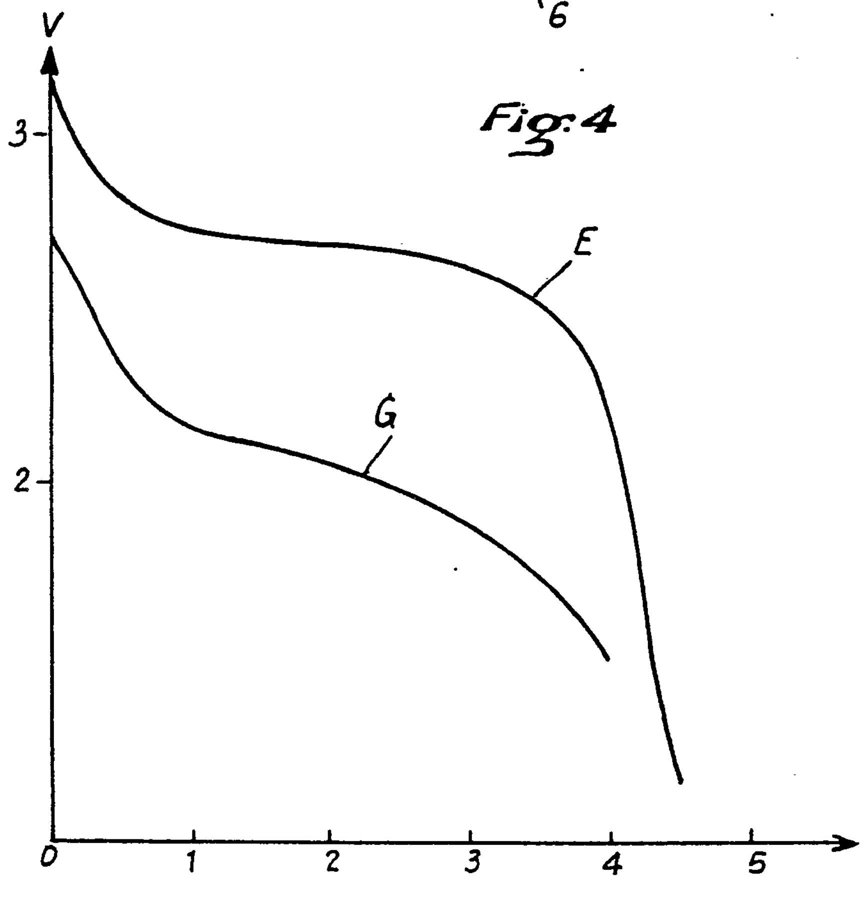


Fig:4

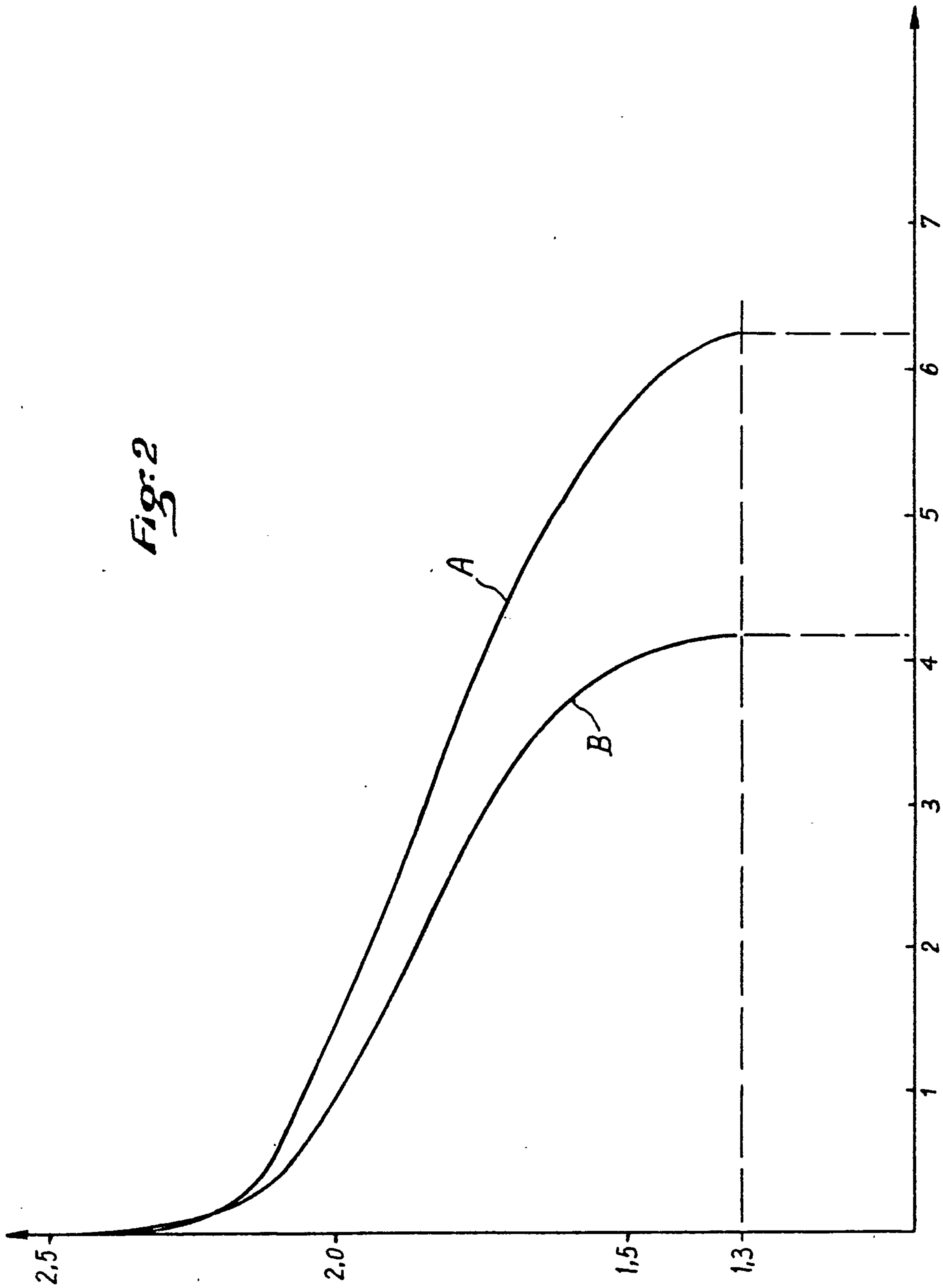


Fig: 2

Fig. 3

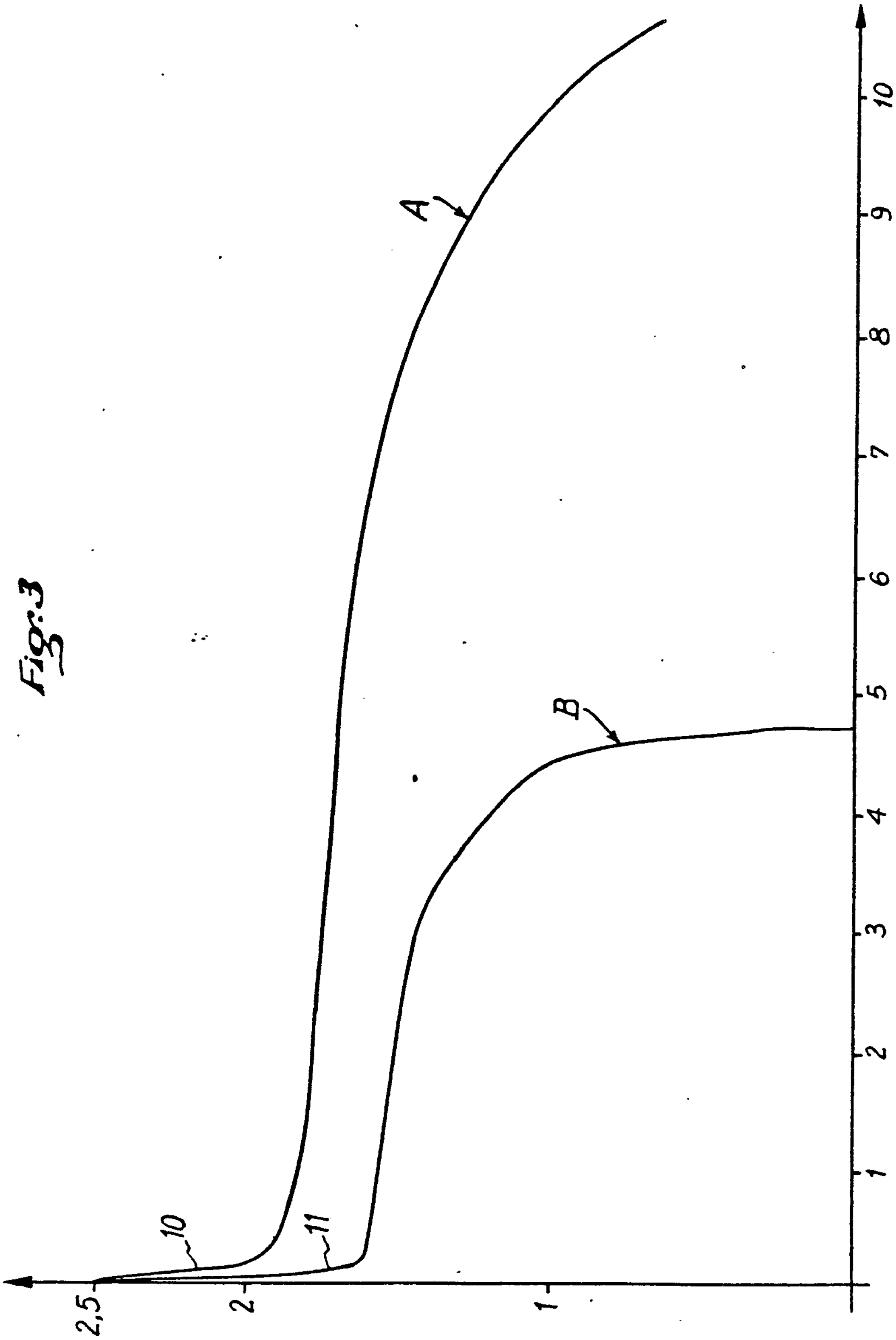

Fig: 5

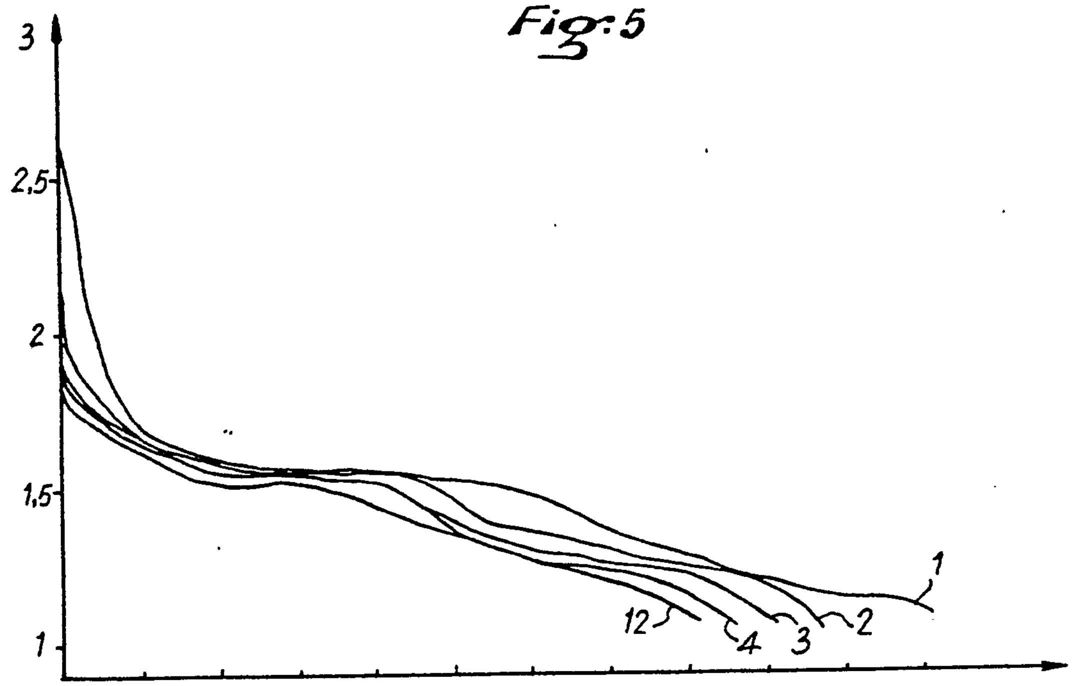


Fig: 6

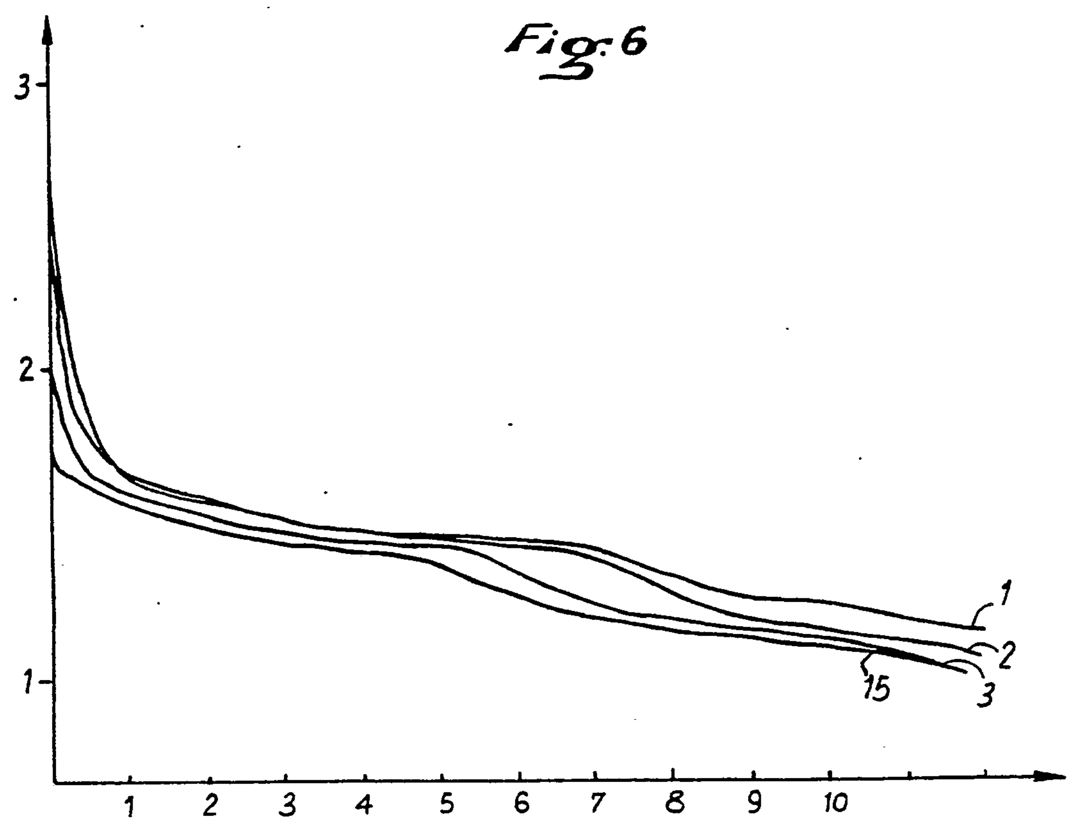

Fig. 7